# EUROPEAN PATENT SPECIFICATION

(11) **EP 2 378 709 B1**
(45) Date of publication and mention of the grant of the patent: **10.01.2018**
(21) Application number: 09837304.6
(22) Date of filing: 09.07.2009
(51) Int. Cl.: H04L 12/14, H04L 29/06

(54) **METHOD AND SYSTEM FOR MULTIMEDIA CONFERENCE OPERATION CHARGING**
VERFAHREN UND SYSTEM ZUR LADUNG VON MULTIMEDIA-KONFERENZOPERATIONEN
PROCÉDÉ ET SYSTÈME POUR LA FACTURATION D'OPÉRATIONS DE CONFÉRENCE MULTIMÉDIA

(30) Priority: 09.01.2009 CN 200910076595
(43) Date of publication of application: 19.10.2011
(73) Proprietor: ZTE Corporation, Shenzhen, Guangdong 518057 (CN)
(72) Inventor: GUO, Wenjie, Guangdong 518057 (CN)
(74) Representative: Novagraaf Technologies
(86) International application number: PCT/CN2009/072703
(87) International publication number: WO 2010/078746

(56) References cited:
- EP-A1- 1 940 076
- CN-A- 1 464 750
- CN-A- 1 474 330
- CN-A- 101 098 449
- "3rd Generation Partnership Project; Technical Specification Group Service and System Aspects; Telecommunication management; Charging management; IP Multimedia Subsystem (IMS) charging (Release 8)", 1 December 2008 (2008-12-01), 3GPP STANDARD; 3GPP TS 32.260, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, PAGE(S) 1 - 108, XP050374487, * Chapters 5.2.2.1.10 and 6.3.1.2 *

## Description

### Field of the Invention

The present invention relates to charging technology, in particular to a method and a system for charging a multimedia conference service.

### Background of the Invention

At present, MultiMedia Telephony (MMTel) service of Internet Protocol Multimedia Subsystem (IMS) includes multiple sub-services such as communication forwarding, communication hold, communication waiting and multimedia conference. For each sub-service, the IMS has the different charging methods; wherein the multimedia Conference Charging (CONF Charging) relates to two parts of fees: conference fee and communication fee of various members participating in the conference.

The above computation of communication fee of various members participating in the conference may be performed generally according to the existing charging standards such as point-to-point communication; whereas for the conference fees, the existing solutions of charging mostly are realized as follows: simply generating a conference starting Charging Data Record (CDR) for a conference establisher when the multimedia conference starts, and generating a conference ending CDR for the conference establisher when the multimedia conference ends. The charging precision is very low, and all the CDRs associated with the multimedia conference are generated by Session Initiation Protocol Application Server (SIP AS) processing communication fees of various participating members. As the charging requirements of
operators are more refined currently, and charging standard of 3^{rd} Generation Partnership Project (3GPP) has explicitly stipulated that the conference fees of multimedia conference may be computed according to the time duration of multimedia conference and the quantity of participating members; therefore, it is impossible to meet such requirements of charging precision by use of the existing method for charging multimedia conference services.

"3RD Generation Partnership Project; Technical Specification Group Service and System Aspects; Telecommunication management; Charging management; IP Multimedia Subsystem (IMS) charging (Release 8)", 1 December 2008 (2008-12-01), 3GPP STANDARD; 3GPP TS 32.260, 3RD GENERATION PARTNERSHIP PROJECT (3GPP), MOBILE COMPETENCE CENTER; 650, ROUTE DES LUCIOLES; F-06921 SOPHIA-ANTIPOLIS CEDEX; FRANCE, PAGE(S)1-108, XP050374487, * Chapters 5.2.2.1.10 and 6.3.1.2 * discloses charging functionality and charging management in GSM/UMTS networks.

European patent application EP1940076 A1 discloses a method for media stream-based charging in a multiparty session. This method includes receiving a request initiated by a party in a multiparty session for changing the media stream of the multiparty session; obtaining the ID of the initiator of the media stream changing request and/or the changed media stream information; sending a charging request to a charging server; the charging server charging for the media stream according to the charging request.

### Summery of the Invention

The present invention is provided to solve the problem that the charging precision of the charging method of the prior art is impossible to achieve the 3GPP charging standard. For this reason, the major object of the present invention is to provide an improved solution of charging a multimedia conference service, which is capable of generating CDR according to the quantity change of the conference members or other changes to improve the granularity and accuracy of charging the multimedia conference service, so as to solve the above problem.

To achieve the above objects, according to one aspect of the present invention, a method for charging a multimedia conference service is provided.

The method for charging a multimedia conference service according to the present invention comprises:
a MultiMedia Telephony Application Server (MMTel AS) sending a Accounting Request (ACR) message to a Charging Data Function (CDF) unit according to a corresponding service request initiated by a User Equipment (UE);
the CDF unit generating a corresponding Charging Data Record (CDR) according to the received ACR message, and sending the generated CDR to a Charging Gateway Function (CGF) unit; and
the CGF unit preprocessing the received CDR, and sending, according to a pre-established rule, a CDR file to a Billing Domain (BD) to generate a corresponding bill;
wherein the ACR message and the CDR comprise a field of Conference Identifier (CONF ID) and a field of Online Participants Number. Preferably, in the above technical solution, the ACR message further comprises a field of Participants Action Type; transmission of the CDR file is implemented via one or the combination of active PUSH mode of the CGF unit and active PULL mode of the BD.

Preferably, in the above technical solution, the service request is a request for creating a multimedia conference; the Participants Action Type is creating a multimedia conference; the service request is a request for actively joining a multimedia conference; and the Participants Action Type is actively-joining a multimedia conference; the service request is a request for inviting other UEs to join a multimedia conference; and the Participants Action Type is being invited to join a multimedia conference; the service request is a request for quitting a multimedia conference; the Participants Action Type is quitting a multimedia conference.

To achieve the above objects, according to another aspect of the present invention, a system for charging a multimedia conference service is provided.

The system for charging a multimedia conference service according to the present invention comprises:
a Call Session Control Function (CSCF) unit, configured to forward a service request message of a UE to an MMTel AS;
the MMTel AS, configured to send an ACR message to a CDF unit according to a corresponding service request initiated by the UE;
the CDF unit, configured to generate a corresponding CDR according to the received ACR message, and send the CDR to a CGF unit;
the CGF unit, configured to preprocess the received CDR and send a CDR file to BD according to a pre-established rule; and
the BD, configured to generate a corresponding bill according to the CDR file;
wherein the ACR message and the CDR comprise a field of CONF ID and a field of Online Participants Number.

Preferably, in the above solution, the ACR message further comprises a field of Participants Action Type.

Preferably, transmission of the CDR file is implemented via one or the combination of active PUSH mode of the CGF unit and active PULL mode of the BD.

In accordance with the method and system for charging the multimedia conference service provided by the present invention, the MMTel AS which is responsible for multimedia telephony service generates a charging message of conference fees for the multimedia conference; moreover, in one multimedia conference, the conference CDR is updated/ the event CDR is generated according to the interim charging message when a conference participant actively joins in the conference, a conference participant is invited to join the conference or a conference participant quits the conference apart from generating/processing the conference CDR at the beginning and ending of the conference. The CDR records the online participant number and other effective charging information. In this way, the online participant number changing and other effective charging information are provided in real time, so as to improve the charging granularity.

According to the present invention, a Conference Identifier (CONF ID) field is added to the charging request message; for the same conference, the CONF ID is identical for all CDRs and has uniqueness for the different conferences during a certain time period. Therefore, the CONF ID may be used for distinguishing the different conferences, and the CONF ID may also be used for performing the aggregation and correlation of multiple CDRs associated with the same conference, so as to improve the charging precision and accuracy.

### Brief Description of the Drawings

The accompanying drawings are used for further illustrating the present invention and constitute a part of the application; the illustrative embodiments of the present invention and the description of the embodiments are used to explain the present invention rather than limit the present invention, wherein,
Fig. 1 is a schematic diagram of the structure of a system for charging a multimedia conference service according to an embodiment of the present invention;
Fig. 2 is a flow chart of a method for charging a multimedia conference service according to an embodiment of the present invention;
Fig. 3 is a flow chart of charging messages of UE 1 creating a multimedia conference according to embodiment 1 of the present invention;
Fig. 4 is a flow chart of charging messages of UE 2 actively joining a multimedia conference according to embodiment 2 of the present invention;
Fig. 5 is a flow chart of charging messages of UE 3 invited to join a multimedia conference according to embodiment 3 of the present invention; and
Fig. 6 is a flow chart of charging messages of ending the multimedia conference according to embodiment 4 of the present invention.

### Detailed Description of the Embodiments

A detailed description of the present invention is provided hereinafter with reference to the drawings and embodiments. It should be noted that, in the case of no contradiction, the embodiments of the present invention and the features thereof can be combined with each other.

The basic idea of the embodiments of the present invention includes the followings. An MMTel AS sends to a Charging Data Function (CDF) unit an Accounting Request (ACR) message including the CONF ID and the Online Participants Number according to a corresponding service request initiated by a User Equipment (UE). The CDF unit generates a corresponding CDR and sends the CDR to a Charging Gateway Function (CGF) unit. The CGF unit preprocesses the CDR and sends a CDR file to a Billing Domain (BD) to generate a corresponding bill. Therefore, the BD may generate a bill according to the time duration of multimedia conference and the participant number, so as to improve the charging precision and accuracy.

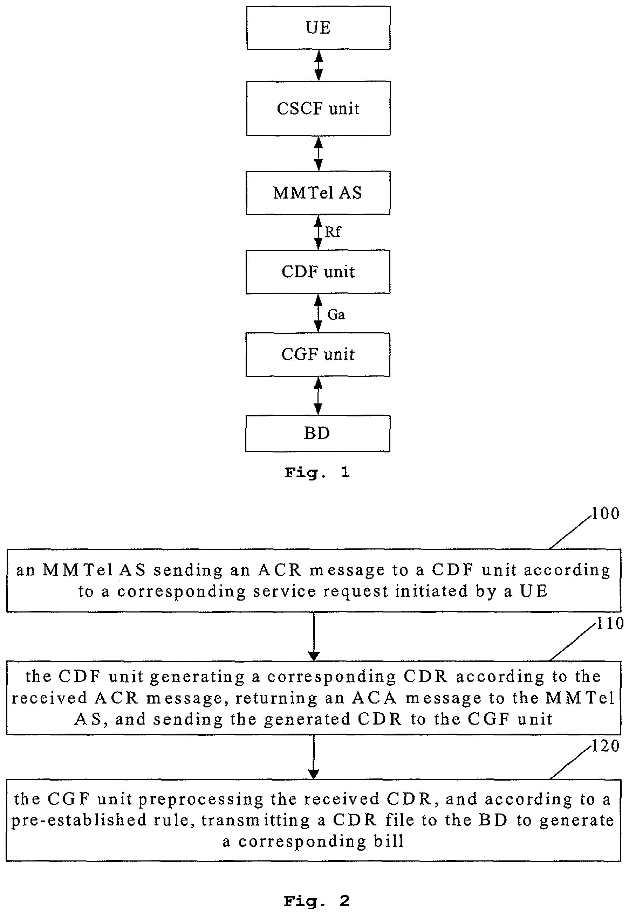

Fig. 1 is a schematic diagram of the structure of a system for charging a multimedia conference service according to an embodiment of the present invention. As shown in Fig. 1, the charging system includes:
a Call Session Control Function (CSCF) unit, which is configured to forward a service request message of a UE to an AS;
the MMTel AS, which is configured to send an ACR message to a CDF unit via an Rf interface according to a corresponding service request initiated by the UE;
the CDF unit, which is configured to generate a corresponding CDR according to the received ACR message, and send the CDR to a CGF unit via a Ga interface;
the CGF unit, which is configured to preprocess the received CDRs and send a CDR file to a BD according to a pre-established rule; and
the BD, which is configured to generate a corresponding bill according to the CDR file.

The above ACR message and the CDR include a field of CONF ID and a field of Online Participants Number. The Online Participants Number participating the conference can be recorded in real time and it is convenient to the correlation and aggregation of multiple CDRs of the same conference.

The above pre-processing may be the combination of the CDRs to CDR files and error processing, and so on.

The transmission of CDR file is implemented via one or the combination of active PUSH mode of the CGF unit and active PULL mode of the BD. In the PUSH mode, the pre-established rule may be established according to the size of file, whether the file is available, the storage capacity or interval time, and so on; wherein if the storage capacity of the CDR file exceeds the pre-established storage capacity limit of the CGF unit, the CGF unit is triggered to send the CDR file to the BD; and in the PULL mode, the BD may actively acquire the CDR file according to pre-established time or frequency.

Fig. 2 is a flow chart of a method for charging a multimedia conference service according to an embodiment of the present invention. As shown in Fig. 2, the method comprises the following steps 100-120.

Step 100, an MMTel AS sends an ACR message to a CDF unit according to a corresponding service request initiated by a UE.

In this step, the service request of the UE maybe a request message for creating a multimedia conference, joining a multimedia conference, inviting other UEs to join a multimedia conference or quitting a multimedia conference, and so on. The MMTel AS inserts the CONF ID and the Online Participants Number into the ACR message, and sends the ACR message to the CDF unit via an Rf interface, wherein the CONF ID is set by the MMTel AS each time a multimedia conference is created; before the multimedia conference is terminated, the CONF ID is not changed, and is a unique no-repeat value within a set time period, i.e. multiple CDRs belonging to the same multimedia conference have the same and unique CONF ID, which may be used for the correlation and aggregation of multiple CDRs of the same conference.

The ACR message may further include a field of Participants Action Type configured to indicate to the operator which action triggers the conference CDR, such as creating a multimedia conference, actively joining a multimedia conference, being invited to join a multimedia conference or quitting a multimedia conference.

Step 110, the CDF unit generates a corresponding CDR according to the received ACR message, returns an Accounting Answer (ACA) message to the MMTel AS, and sends the generated CDR to the CGF unit.

In this step, the CDR also includes a field of CONF ID, a field of Online Participants Number and a field of Participants Action Type; and the Online Participants Number combined with the timestamp of the same CDR may reflect the change condition of participants number of the same conference exactly when there are many CDRs in the conference, so as to provide enough information to the BD for computing the conference fee.

The conference fee of multimedia conference may be session-unrelated or session-related; wherein if the conference fee is session-unrelated, the CDF unit generates several Event CDRs for the conference respectively when creating a conference, a member actively joining a conference, a member being invited to join a conference, a member quitting a conference and a conference being terminated; if the conference fee is session-related, the CDF unit opens a CDR, updates the CDR and close the CDR for the conference respectively when creating a conference, a member actively joining a conference, a member being invited to join a conference, a member quitting a conference and a conference being terminated. No matter in which case, the values of CONF ID are all set each time creating a conference and are unchanged until the end of conference.

Step 120, the CGF unit preprocesses the received CDR, and according to a pre-established rule, transmits a CDR file to the BD to generate a corresponding bill.

In this step, the above pre-processing may be combination of the CDRs to the CDR file and error processing, and so on.

The transmission of the CDR file is implemented via one or the combination of active PUSH mode of the CGF unit and the active PULL mode of the BD. In the PUSH mode, the pre-established rule may be established according to the size of file, whether the file is available, the storage capacity or interval time, and so on; wherein if the storage capacity of CDR file exceeds the pre-established storage capacity limit of the CGF unit, the CGF unit is triggered to send the CDR file to the BD; and in the PULL mode, the BD may actively acquire the CDR file according to pre-established time or frequency.

When charging a multimedia conference, the communication fee of various participants served as the branch of incoming calling belongs to the range of the charging information generated by the IMS basic network element Service/Inquire/Proxy Call Session Control Function (S/I/P CSCF) unit and the SIP AS; whereas the conference fee belongs to the range of the charging information generated by the MMTel AS. The SIP AS and the MMTel AS are the logical distinction; and they may coexist in a same AS entity during physical deployment in practice.

The charging principle of multimedia conference provided by the present invention is that, the communication fee of conference member is measured by the SIP AS and Multimedia Resource Function Controller (MRFC), while the conference fee is measured by the MRFC and the MMTel As processing multimedia conference service.

The method for charging a multimedia conference service of the present invention is hereinafter described with reference to the drawings and embodiments.

Taking a simple multimedia conference scene as an example, there are three UEs including UE 1, UE 2 and UE 3; wherein the UE 1 creates a multimedia conference successfully, the UE 2 actively joins the multimedia conference, and the UE 3 is invited to join the multimedia conference; and the multimedia conference is terminated after a period of time. The condition for triggering the ending of the multimedia conference may include the establisher UE 1 quitting, or all the UEs quits; and the detailed triggering condition is determined according to the charging strategy of operator. In this embodiment, the charging strategy is supposed as follows. The quitting of the UE 1 triggers the ending of multimedia conference, the session-dependent charging mode is used, and the CDR file is transmitted by use of the active PUSH mode of the CGF unit.

### Embodiment 1

The multimedia conference scene of the embodiment is: the multimedia conference has not been uncreated and then the UE 1 creates a multimedia conference.

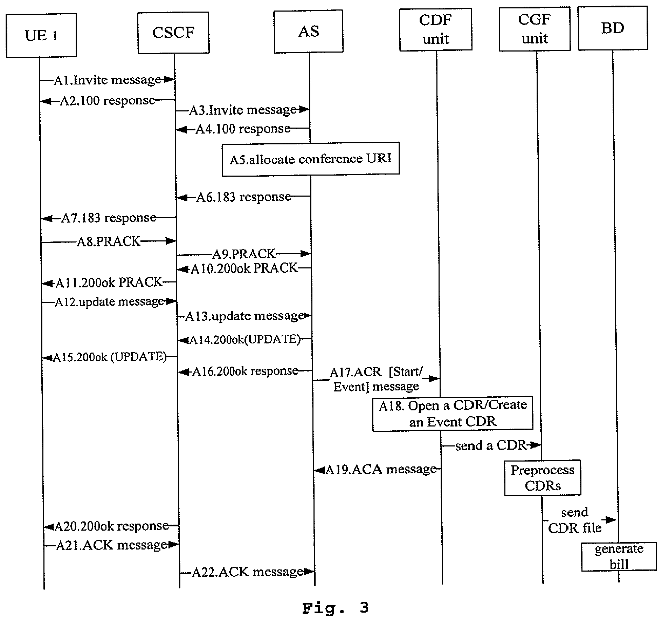

Fig. 3 is a flow chart of charging messages of the UE 1 creating a multimedia conference according to embodiment 1 of the present invention. As shown in Fig. 3, steps A1-A15 are the process of multimedia resource negotiation performed between the UE 1 and an AS; after the multimedia resource negotiation is successful, step A16, steps A20-A22 are performed; the AS returns a 200 ok response message to the UE 1; after receiving the 200 ok response message, the UE 1 sends an Acknowledge (ACK) message to the AS, and meanwhile, steps A17-A19 are performed, wherein the AS initiates a process of charging a multimedia conference service.

In the above, the method for charging the multimedia conference service includes the following steps.

Step 1, an MMTel AS sends an ACR message to a CDF unit according to a request for creating a multimedia conference initiated by the UE 1.

The field of CONF ID of the ACR message is set by the MMTel As. In this embodiment, the value of the CONF ID of multimedia conference is set as 100; the field of Online Participants Number records real-time online participants number and is filled by the MMTel AS, and the value herein is 1. The ACR message may also include a field of Participants Action Type which is configured to indicate to the operator which action triggers the conference CDR; in this embodiment, the value of the field should be creating a conference, i.e. CREATE_CONF.

Step 2, according to the received ACR message, the CDF unit opens the conference CDR, returns an ACA message to the MMTel AS, and sends the CDR to the CGF unit.

The CDF unit opens a conference CDR including a field of CONF ID, a field of Online Participants Number and a field of Participants Action Type, wherein the value of CONF ID is 100, the value of Online Participants Number is 1, and the value of Participants Action Type is CREATE_CONF.

Step 3, the CGF unit preprocesses the received CDRs, and according to a pre-established rule, sends the generated CDR file to the BD to generate a corresponding bill.

In the above, the storage capacity limit of the CDR file may be pre-established; the CGF unit pushes the CDR file to the BD once the CDR file exceeds the storage capacity limit.

### Embodiment 2

The multimedia conference scene of the embodiment is: the multimedia conference has been created by the UE 1 and the UE 2 actively requests to join the above multimedia conference created by the UE 1.

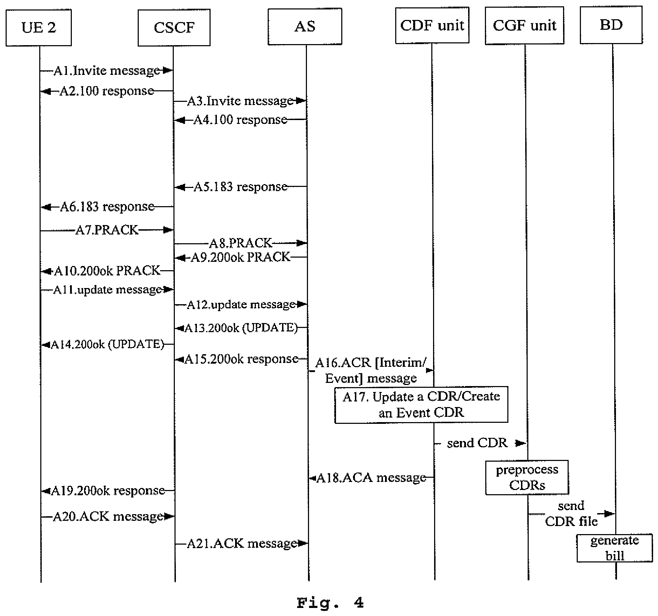

Fig. 4 is a flow chart of charging messages of the UE 2 actively joining a multimedia conference according to embodiment 2 of the present invention. As shown in Fig. 4, steps A1-A14 are the process of multimedia resource negotiation performed between the UE 2 and an AS; after the multimedia resource negotiation is successful, step A15, steps A19-A21 are performed, wherein the AS returns a 200 ok response message to the UE 2; after receiving the 200 ok response message, the UE 2 sends an Acknowledge (ACK) message to the AS, and meanwhile steps A16-A18 are performed, wherein the As initiates a process of charging a multimedia conference service.

In the above, the method for charging the multimedia conference service comprises the following steps.

Step 1, an MMTel AS sends an ACR message to a CDF unit according to a request for joining a multimedia conference initiated by the UE 2.

The value of CONF ID of the ACR message is set as 100; the field of Online Participants Number records the real-time online participant number and is filled by the MMTel AS; and the value herein is 2. The ACR message may also include a field of Participants Action Type which is configured to indicate to the operator which action triggers the conference CDR. In this embodiment, the value of the field is joining a conference, i.e. JOIN_CONF.

Step 2, according to the received ACR message, the CDF unit updates the conference CDR, returns an ACA message to the MMTel AS, and sends the CDR to the CGF unit.

The CDF unit updates a conference CDR including a field of CONF ID, a field of Online Participants Number appeared in the form of a list, a field of Participants Action Type and timestamp, wherein the value of CONF ID is 100, the value of Online Participants Number is 2, and the value of Participants Action Type is JOIN_CONF.

Step 3, the CGF unit preprocesses the received CDR, and according to a pre-established rule, sends the generated CDR file to the BD to generate a corresponding bill.

In the above, the storage capacity limit of the CDR file may be pre-established; and the CGF unit pushes the CDR file to the BD once the CDR file exceeds the storage capacity limit.

### Embodiment 3

The multimedia conference scene of the embodiment is: the multimedia conference has been created by the UE 1 and the UE 2 has actively joined the multimedia conference; at this time, the UE 3 is invited to join the above multimedia conference created by the UE 1.

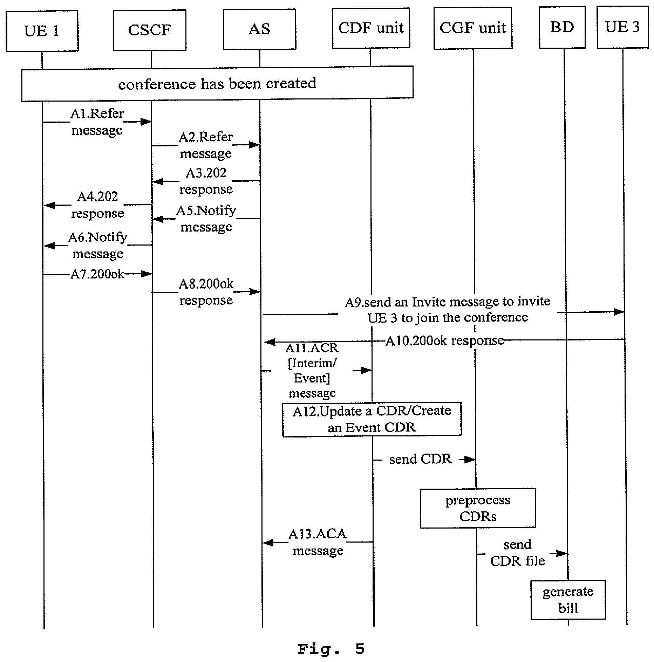

Fig. 5 is a flow chart of charging messages of the UE 3 invited to join a multimedia conference according to embodiment 3 of the present invention. As shown in Fig. 5, the conference has been created; another user UE 3 is invited to join the conference; in steps A1-A10, the UE 1 initiates a Refer message to an AS to invite the UE 3 to join the conference; the AS returns a 202 response indicating that the refer message has been received; the AS notifies the UE 1 that the AS knows the message via a Notify message and prepares the invitation; the UE 1 returns a 200 ok response to the AS; after receiving the 200 ok response, the AS initiates an Invite message to the UE 3 for inviting the UE 3 to join the conference; the UE 3 sends a 200 ok response to the AS; and in steps A11-A13, the AS initiates a process of charging a multimedia conference service.

In the above, the method for charging the multimedia conference service comprises the following steps.

Step 1, an MMTel AS sends an ACR message to a CDF unit according to a request for inviting the UE 3 to join a multimedia conference initiated by the UE 1.

The value of CONF ID of the ACR message is set as 100; the field of Online Participants Number records the real-time online participant number and is filled by the MMTel AS; and the value herein is 3. The ACR message may also include a field of Participants Action Type which is configured to indicate to the operator which action triggers the conference CDR. In this embodiment, the value of the field is invited to join a conference, i.e. INVITE_CONF.

Step 2, according to the received ACR message, the CDF unit updates the conference CDR, returns an ACA message to the MMTel AS, and sends the CDR to the CGF unit.

The CDF unit updates a conference CDR including a field of CONF ID, a field of Online Participants Number appeared in the form of a list, a field of Participants Action Type and timestamp, and so on, wherein the value of CONF ID is 100, the value of Online Participants Number is 3, and the value of Participants Action Type is INVITE_CONF.

Step 3, the CGF unit preprocesses the received CDR, and according to a pre-established rule, sends the generated CDR file to the BD to generate a corresponding bill.

In the above, the storage capacity limit of the CDR file may be pre-established; and the CGF unit pushes the CDR file to the BD once the CDR file exceeds the storage capacity limit.

### Embodiment 4

The multimedia conference scene of the embodiment is: he multimedia conference has been created by the UE 1, the UE 2 has actively joined the multimedia conference, and the UE 3 is invited to join the multimedia conference; at this time, the UE 1 quitting the multimedia conference triggers the end of multimedia conference.

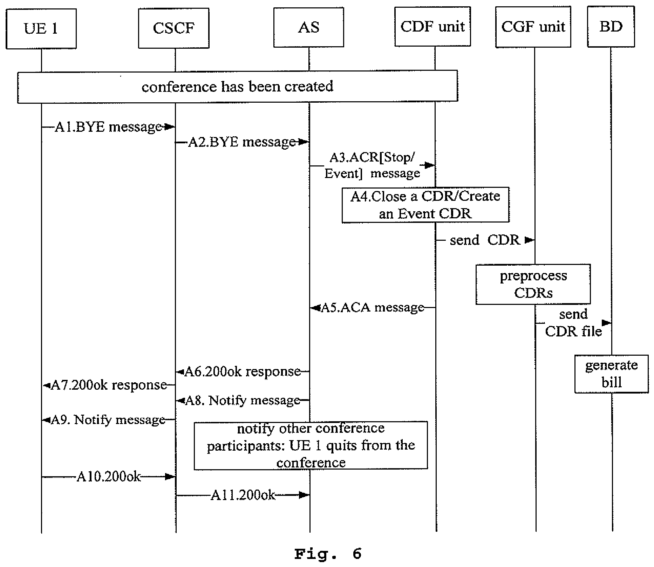

Fig. 6 is a flow chart of charging messages of ending the multimedia conference according to embodiment 4 of the present invention. As shown in Fig. 6, in steps A1-A2, the UE 1 sends a BYE message to the CSCF for requesting to quit; the CSCF forwards the BYE message to the AS. In steps A3-A5, the AS initiates a process of charging a multimedia conference service including the conference AS sending an ACR message to the CDF, the CDF generating an ending CDR, and the CDF returning an ACA to the AS; and in steps A6-A11, the AS sends a 200 ok response to the UE 1 while the AS notifies other conference member that the UE 1 quits from the conference; the UE 1 returns a 200 ok response to the AS.

In the above, the method for charging the multimedia conference service comprises the following steps.

Step 1, an MMTel AS sends an ACR message to a CDF unit according to a request for quitting a multimedia conference initiated by the UE 1.

The value of CONF ID of the ACR message is set as 100; the field of Online Participants Number records the real-time online participant number and is filled by the MMTel AS; and the value herein is 2. The ACR message may also include a field of Participants Action Type which is configured to indicate to the operator which action triggers the conference CDR. In this embodiment, the value of the field is quitting a conference, i.e. QUIT_CONF.

Step 2, according to the received ACR message, the CDF unit closes the conference CDR, returns an ACA message to the MMTel AS, and sends the CDR to the CGF unit.

The CDF unit closes a conference CDR including a field of CONF ID, a field of Online Participants Number appeared in the form of a list, a field of Participants Action Type and timestamp, and so on, wherein the value of CONF ID is 100, the value of Online Participants Number is 2, and the value of Participants Action Type is QUIT_CONF.

Step 3, the CGF unit preprocesses the received CDRs, and according to a pre-established rule, sends a CDR file to the BD to generate a corresponding bill.

In the above, the storage capacity limit of CDR file may be pre-established; and the CGF unit pushes the CDR file to the BD once the CDR file exceeds the storage capacity limit.

According to an embodiment of the present invention, a computer readable medium is further provided for storing computer executable instructions; the computer or processor may perform the processing of steps S100-S120 as shown in Fig. 2 when the instructions are executed by the computer or processor; preferably, one or more of the above embodiments 1-4 may be performed.

To sum up, it can be seen from the above embodiments that, the method and system for charging a multimedia conference service provided by the embodiments of the present invention may implement the aggregation of multiple conference CDRs of the same conference via a CONF ID; the participant number carried by each partial CDR combined with the information such as timestamp represents a list with full information, i.e. in the CDR, the conference service request/response timestamp and the field such as the field of online participants number form a combined field, which may appear repeatedly in a list form in the CDR, so as to provide the detailed and exact information to the BD, so that the BD may compute the conference fee according to its conference charging strategy.

Obviously, it should be understood by those skilled in the art that, the above various modules or steps of the present invention may be implemented by use of a universal computing device; they may be centralized at a single computing device or distributed at the network composed of multiple computing devices; alternatively, they may be implemented by an executable program code of computing device, therefore which may be stored in a storage device and executed by a computing device, or which may be respectively formed as various integrated circuit modules, or multiple modules or steps of which may be formed as single integrated circuit module. Therefore, the present invention is not limited to any specific combination of hardware and software.

The foregoing is only preferred embodiments of the present invention and is not for use in limiting the protection scope thereof, and for those skilled in the art, there may be various modifications and changes to the present invention. Any modification, equivalent replacement and improvement made under principle of the present invention should be included in the protection scope thereof.

## Claims

1. A method for charging a multimedia conference service, comprising:
a MultiMedia Telephony Application Server, MMTel AS, sending (100) an Accounting Request, ACR, message to a Charging Data Function, CDF, unit according to a corresponding service request initiated by a User Equipment, UE;
the CDF unit generating (110) a corresponding Charging Data Record, CDR, according to the received ACR message, and sending the generated CDR to a Charging Gateway Function, CGF, unit; and
the CGF unit preprocessing (120) the received CDR, and sending, according to a pre-established rule, a CDR file to a Billing Domain, BD, to generate a corresponding bill;
wherein the ACR message and the CDR comprise a field of Conference Identifier, CONF ID, and
**characterized in that**
the ACR message and the CDR comprise a field of Online Participants Number.

2. The method for charging a multimedia conference service according to claim 1, **characterized in that** the ACR message further comprises a field of Participants Action Type.

3. The method for charging a multimedia conference service according to claim 2, **characterized in that** transmission of the CDR file is implemented via one or the combination of active PUSH mode of the CGF unit and active PULL mode of the BD.

4. The method for charging a multimedia conference service according to claim 2 or 3, **characterized in that** the service request is a request for creating a multimedia conference; the Participants Action Type is creating a multimedia conference.

5. The method for charging a multimedia conference service according to claim 2 or 3, **characterized in that** the service request is a request for actively joining a multimedia conference; and the Participants Action Type is actively-joining a multimedia conference.

6. The method for charging a multimedia conference service according to claim 2 or 3, **characterized in that** the service request is a request for inviting other UEs to join a multimedia conference; and the Participants Action Type is being invited to join a multimedia conference.

7. The method for charging a multimedia conference service according to claim 2 or 3, **characterized in that** the service request is a request for quitting a multimedia conference; the Participants Action Type is quitting a multimedia conference.

8. A system for charging a multimedia conference service, comprising:
a Call Session Control Function, CSCF, unit, configured to forward a service request message of a User Equipment, UE, to a MultiMedia Telephony Application Server, MMTel AS;
the MMTel AS, configured to send an Accounting Request, ACR, message to a Charging Data Function, CDF, unit according to a corresponding service request initiated by the UE;
the CDF unit, configured to generate a corresponding Charging Data Record, CDR, according to the received ACR message, and send the CDR to a CGF unit;
the CGF unit, configured to preprocess the received CDR and send a CDR file to a Billing Domain, BD, according to a pre-established rule; and
the BD, configured to generate a corresponding bill according to the CDR file;
wherein the ACR message and the CDR comprise a field of Conference Identifier, CONF ID, and
**characterized in that** the ACR message and the CDR comprise a field of Online Participants Number.

9. The system for charging a multimedia conference service according to claim 8, **characterized in that** the ACR message further comprises a field of Participants Action Type.

10. The system for charging a multimedia conference service according to claim 8 or 9, **characterized in that** transmission of the CDR file is implemented via one or the combination of active PUSH mode of the CGF unit and active PULL mode of the BD.

## Patentansprüche

1. Verfahren zur Vergebührung eines Multimediakonferenzdienstes, das Folgendes umfasst:
einen MultiMedia-Telefonieanwendungsserver MMTel AS,
Senden (100) einer Fakturierungsanforderungsnachricht (Accounting Request, ACR) an eine Vergebührungsdatenfunktionseinheit (Charging Data Function, CDF) gemäß einer entsprechenden Dienstanforderung, die von einer Teilnehmereinrichtung (User Equipment, UE) initiiert wurde;
Erzeugen (110) durch die CDF-Einheit eines entsprechenden Vergebührungsdatensatzes (Charging Data Record, CDR) gemäß der empfangenen ACR-Nachricht und
Senden des erzeugten CDR an eine Vergebührungs-Gatewayfunktionseinheit (Charging Gateway Function, CGF) und
Verarbeiten (120) durch die CGF-Einheit des empfangenen CDR und Senden gemäß einer zuvor festgelegten Regel einer CDR-Datei an eine Abrechnungsdomäne (Billing Domain, BD), um eine entsprechende Rechnung zu erzeugen;
wobei die ACR-Nachricht und der CDR ein Feld "Konferenzkennung" (Conference Identifier, CONF ID) umfassen und
**dadurch gekennzeichnet, dass**
die ACR-Nachricht und der CDR ein Feld "Onlineteilnehmeranzahl" (Online Participants Number) umfassen.

2. Verfahren zur Vergebührung eines Multimediakonferenzdienstes nach Anspruch 1, **dadurch gekennzeichnet, dass** die ACR-Nachricht ferner ein Feld "Teilnehmeraktionstyp" (Participants Action Type) umfasst.

3. Verfahren zur Vergebührung eines Multimediakonferenzdienstes nach Anspruch 2, **dadurch gekennzeichnet, dass** die Übertragung der CDR-Datei via einen oder die Kombination von aktivem PUSH-Modus der CGF-Einheit und aktivem PULL-Modus der BD implementiert wird.

4. Verfahren zur Vergebührung eines Multimediakonferenzdienstes nach Anspruch 2 oder 3, **dadurch gekennzeichnet, dass** die Dienstanforderung eine Anforderung zum Einrichten einer Multimediakonferenz ist; der Teilnehmeraktionstyp ist Einrichten einer Multimediakonferenz.

5. Verfahren zur Vergebührung eines Multimediakonferenzdienstes nach Anspruch 2 oder 3, **dadurch gekennzeichnet, dass** die Dienstanforderung eine Anforderung zum aktiven Beitreten zu einer Multimediakonferenz ist und der Teilnehmeraktionstyp aktives Beitreten zu einer Multimediakonferenz ist.

6. Verfahren zur Vergebührung eines Multimediakonferenzdienstes nach Anspruch 2 oder 3, **dadurch gekennzeichnet, dass** die Dienstanforderung eine Anforderung zum Einladen anderer UEs, einer Multimediakonferenz beizutreten, ist und der Teilnehmeraktionstyp ist Einladen, einer Multimediakonferenz beizutreten.

7. Verfahren zur Vergebührung eines Multimediakonferenzdienstes nach Anspruch 2 oder 3, **dadurch gekennzeichnet, dass** die Dienstanforderung eine Anforderung zum Verlassen einer Multimediakonferenz ist; der Teilnehmeraktionstyp ist Verlassen einer Multimediakonferenz.

8. System zur Vergebührung eines Multimediakonferenzdienstes, das Folgendes umfasst:
eine Anrufsitzungssteuerfunktionseinheit (Call Session Control Function, CSCF), die dazu ausgelegt ist, eine Dienstanforderungsnachricht einer Teilnehmereinrichtung, UE, an einen MultiMedia-Telefonieanwendungsserver, MMTel AS, weiterzuleiten;
den MMTel AS, der dazu ausgelegt ist, eine Fakturierungsanforderungsnachricht, ACR, an eine Vergebührungsdatenfunktionseinheit, CDF, gemäß einer entsprechenden Dienstanforderung zu senden, die von der UE initiiert wurde;
die CDF-Einheit, die dazu ausgelegt ist, einen entsprechenden Vergebührungsdatensatz, CDR, gemäß der empfangenen ACR-Nachricht zu erzeugen und die CDR an eine CGF-Einheit zu senden;
die CGF-Einheit, die dazu ausgelegt ist, die empfangene CDR vorzuverarbeiten und eine CDR-Datei gemäß einer zuvor festgelegten Regel an eine Abrechnungsdomäne, BD, zu senden; und
die BD, die dazu ausgelegt ist, gemäß der CDR-Datei eine entsprechende Rechnung zu erzeugen;
wobei die ACR-Nachricht und der CDR ein Feld "Konferenzkennung" (Conference Identifier, CONF ID) umfassen und
**dadurch gekennzeichnet, dass** die ACR-Nachricht und der CDR ein Feld "Onlineteilnehmeranzahl" (Online Participants Number) umfassen.

9. System zur Vergebührung eines Multimediakonferenzdienstes nach Anspruch 8, **dadurch gekennzeichnet, dass** die ACR-Nachricht ferner ein Feld "Teilnehmeraktionstyp" (Participants Action Type) umfasst.

10. System zur Vergebührung eines Multimediakonferenzdienstes nach Anspruch 8 oder 9, **dadurch gekennzeichnet, dass** die Übertragung der CDR-Datei via einen oder die Kombination von aktivem PUSH-Modus der CGF-Einheit und aktivem PULL-Modus der BD implementiert wird.

## Revendications

1. Procédé pour la tarification d'un service de conférence multimédia, comprenant :
l'envoi (100) par un serveur d'application de téléphonie multimédia, MMTel AS, d'un message de demande de comptabilité, ACR, à une unité de fonction de données de tarification, CDF, en fonction d'une demande de service correspondante émise par un équipement utilisateur, UE ;
la génération (110) par l'unité CDF d'un enregistrement de données de tarification, CDR, correspondant en fonction du message ACR reçu, et l'envoi du CDR généré à une unité de fonction de passerelle de tarification, CGF ; et
le prétraitement (120) par l'unité CGF du CDR reçu, et l'envoi, en fonction d'une règle préétablie, d'un fichier CDR à un domaine de facturation, BD, pour générer une facture correspondante ;
dans lequel le message ACR et le CDR comprennent un champ d'identificateur de conférence, CONF ID, et
**caractérisé en ce que**
le message ACR et le CDR comprennent un champ de nombre de participants en ligne.

2. Procédé pour la tarification d'un service de conférence multimédia selon la revendication 1, **caractérisé en ce que** le message ACR comprend en outre un champ de type d'action de participants.

3. Procédé pour la tarification d'un service de conférence multimédia selon la revendication 2, **caractérisé en ce que** la transmission du fichier CDR est mise en oeuvre par le biais d'un ou de la combinaison d'un mode PUSH actif de l'unité CGF et d'un mode PULL actif du BD.

4. Procédé pour la tarification d'un service de conférence multimédia selon la revendication 2 ou 3, **caractérisé en ce que** la demande de service est une demande pour créer une conférence multimédia ; le type d'action de participants est de créer une conférence multimédia.

5. Procédé pour la tarification d'un service de conférence multimédia selon la revendication 2 ou 3, **caractérisé en ce que** la demande de service est une demande pour participer activement à une conférence multimédia ; et le type d'action de participants est de participer activement à une conférence multimédia.

6. Procédé pour la tarification d'un service de conférence multimédia selon la revendication 2 ou 3, **caractérisé en ce que** la demande de service est une demande pour inviter d'autres UE à participer à une conférence multimédia ; et le type d'action de participants est d'être invité à participer à une conférence multimédia.

7. Procédé pour la tarification d'un service de conférence multimédia selon la revendication 2 ou 3, **caractérisé en ce que** la demande de service est une demande pour quitter une conférence multimédia ; le type d'action de participants est de quitter une conférence multimédia.

8. Système pour la tarification d'un service de conférence multimédia, comprenant :
une unité de fonction de commande de session d'appel, CSCF, configurée pour transmettre un message de demande de service d'un équipement utilisateur, UE, à un serveur d'application de téléphonie multimédia, MMTel AS ;
le MMTel AS étant configuré pour envoyer un message de demande de comptabilité, ACR, à une unité de fonction de données de tarification, CDF, en fonction d'une demande de service correspondante émise par l'UE ;
l'unité CDF étant configurée pour générer un enregistrement de données de tarification, CDR, correspondant en fonction du message ACR reçu, et envoyer le CDR à l'unité CGF ;
l'unité CDF étant configurée pour prétraiter le CDR reçu et envoyer un fichier CDR à un domaine de facturation, BD, en fonction d'une règle préétablie ; et
le BD étant configuré pour générer une facture correspondante en fonction du fichier CDR ;
dans lequel le message ACR et le CDR comprennent un champ d'identificateur de conférence, CONF ID, et
**caractérisé en ce que** le message ACR et le CDR comprennent un champ de nombre de participants en ligne.

9. Système pour la tarification d'un service de conférence multimédia selon la revendication 8, **caractérisé en ce que** le message ACR comprend en outre un champ de type d'action de participants.

10. Système pour la tarification d'un service de conférence multimédia selon la revendication 8 ou 9, **caractérisé en ce que** la transmission du fichier CDR est mise en oeuvre par le biais d'un ou de la combinaison d'un mode PUSH actif de l'unité CGF et d'un mode PULL actif du BD.
